# EUROPEAN PATENT SPECIFICATION

(11) **EP 3 994 408 B1**
(45) Date of publication and mention of the grant of the patent: **05.11.2025**
(21) Application number: 20852578.2
(22) Date of filing: 29.07.2020
(51) Int. Cl.: F28D 1/047, F24F 12/00, F28G 13/00

(54) **A BATTERY DEVICE FOR A VENTILATION SYSTEM**
BATTERIEVORRICHTUNG FÜR EIN LÜFTUNGSSYSTEM
DISPOSITIF ACCUMULATEUR POUR SYSTÈME DE VENTILATION

(30) Priority: 12.08.2019 SE 1930266; 28.01.2020 SE 2030023; 28.01.2020 SE 2030024; 30.03.2020 SE 2030109
(43) Date of publication of application: 11.05.2022
(73) Proprietor: Enjay AB, 213 76 Malmö (SE)
(72) Inventor: LEKEBERG, Nils, 21376 MALMÖ (SE); LEKEBERG, Hans, 21376 MALMÖ (SE)
(74) Representative: Basck Limited
(86) International application number: PCT/SE2020/050756
(87) International publication number: WO 2021/029809

(56) References cited:
- WO-A1-2018/059443
- CH-A5- 692 516
- FR-A1- 2 624 268
- JP-A- 2002 156 151
- US-A- 2 792 201
- US-A- 4 969 510
- US-A1- 2004 069 470
- US-A1- 2004 188 076
- US-A1- 2016 054 076
- US-A1- 2016 054 076
- US-A1- 2018 283 795
- US-B1- 6 820 685

## Description

### TECHNICAL FIELD

The present invention relates to a battery device for a ventilations system and in particular a ventilation system in a an environment where particles are present in the exhaust air, and in particular to a battery device in a ventilation system, in particular a ventilation system in a marine environment, a kitchen environment, a textile drying environment, or other system used with air carrying particles.

### BACKGROUND

Most ventilation systems in newer residential and office buildings that contain both exhaust air and supply air deploy energy recycling equipment. The general aim is to extract the energy from the warm exhaust air and, via a heat exchanger device, transfer the energy into the cold supply air to pre-warm it, using recycled energy. Such a part can for example be a cross-stream air-to-air exchanger configured to transfer the inherent energy in the exhaust air to the supply air utilizing metal flanges, or a rotating air-to-air exchanger where the energy exchange is achieved by means of a rotating disc transferring the energy from the exhaust air to the supply air. Such a part can also be a battery device which is configured to extract inherent energy in the exhaust air mainly utilizing the difference in temperature between the exhaust air and a fluid inside the battery and subsequently reversing the process in the supply air to heat the cool supply air.

Particularly during the cold winter months, regardless of which recycling technology is deployed, this recycled energy cannot raise the temperature of the supply air all the way to the desired temperature needed to keep a comfortable ambient temperature indoors - Therefore, the supply air will be incrementally heated with an extra heating battery, placed downstream of the recycling battery. This battery is connected to the building's heating system, utilizing whatever means of heating that is deployed, for example district heating, gas or electricity to infuse the supply air with the incremental energy needed to achieve the desired temperature. To protect the technical equipment designed to extract the energy from the warm exhaust air, the flowing exhaust air is always filtered before it is led into the energy recycling equipment. Such filtration normally consists of bag filters, designed to capture particles that otherwise might get stuck on the recycling equipment and there, as a first detrimental effect, deteriorate the efficiency of the energy exchange. As a second detrimental effect, the particles can start blocking the path of the exhaust air, resulting in an increased resistance, which means the fans will have to work harder to extract the required air volumes from the building, thus increasing the energy bill. In the extreme case, the particles building up might eventually block up the equipment to an extent that the air flow cannot be maintained, resulting in a seriously deteriorated indoor air quality.

As one aim is to reduce the energy needed, by recycling the energy (heat or cold), it is a serious drawback if the energy needed to drive the air flow through the recycling equipment would substantially detract from the total net amount of energy recycled by the system.

In ventilation systems for marine vessels, marine structures or similar establishments different types of air borne salt particles create severe issues for the technical equipment designed to extract the energy from the warm exhaust air.

In ventilation systems for textile drying, such as in clothes dryers or other dry tumblers, different types of lint particles create issues for the technical equipment designed to extract the energy from the warm exhaust air. They also clog up the exhaust system, requiring additional power to transport he exhaust air through the exhaust system.

The problem with these particles is that they will - very quickly - clog up the traditional bag filters used to protect the recycling equipment as well as corrode the equipment. Traditionally, such recycling equipment is thus not useful in ventilation systems that handles airflow containing such contaminants.

As will be discussed in the summary below, the inventors have realized after insightful and inventive reasoning that these problems are similar to the problems experienced in kitchen ventilation systems and are therefore proposing to treat the problems in a similar manner. There is also a problem in the prior art in that manufacturing, assembling and mounting traditional systems having both a filter and a battery unit requires time and leads to high costs.

One prior art heat exchanging device is disclosed in the patent application published as US2004069470A1 which discloses a Bent-Tube Heat Exchanger which solves thermal expansion problem, allowing airtight connections for both sides of tube connection to tube sheets instead of a sliding connection on one side. Additionally, unlike in spiral-tube heat exchangers, the use of straight tube sections allows for uniform tube spacing and having the same length for all parallel tubes.

### SUMMARY

An objective has been to find a new technical solution that would enable to extract the inherent energy in exhaust air (for example from restaurant, bakery, marine or dryer and similar ventilation systems) robustly, over time, even when handling air carrying lots of contaminants, i.e. particles. It should be noted that the teachings herein may be applied to both heating systems as well as cooling systems, where heating energy is extracted and recycled in heating systems and cooling energy is extracted and recycled in cooling systems.

An objective has been to find a new technical solution that would enable to extract the inherent energy also in air (for example for marine environments, dryer systems as well as from restaurant, bakery and similar ventilation systems) without having to deploy and try to protect energy recycling units that are designed for other types of ventilation systems, i.e. energy recycling units for residential and office ventilation, which cannot survive in the extreme environment. The new technical solution is a totally new type of energy extraction unit, specifically designed to be able to survive, that is to operate efficiently over time, in the aggressive environment occurring in ventilation systems in marine environments, textile dryer systems restaurants, bakeries and similar operations represent, without any need for pre-filtration of the air by means of a separate air cleaning technology and with the inherent, specifically designed-in ability to manage the air borne particles that would clog up the traditional energy recyclers. The teachings herein is basically applicable to any ventilation system where the exhaust air carries particles.

The battery device according to herein, and the ventilation system comprising such a battery device, is thus arranged to be used in marine environments, dryer systems as well as from restaurant, bakery and similar ventilation systems. For the context of this application, marine environments are taken to include marine vessels, marine structures and any building, housing or other structure needing heating and/or ventilation close to salt-water, such as in harbours, ports and seaside towns and villages.

For the context of this application, dryer systems are taken to include ventilation systems in specific machinery as well as in rooms or plants housing such machinery.

These objectives are achieved by a technique defined in the appended independent and dependent claims and where certain embodiments are being set forth in the related dependent claims.

In a first aspect, there is provided a battery device for a ventilation system, arranged to receive a flow of air, configured to extract energy from the flow of air, said battery device comprises: a housing arranged to receive said flow of air through a first end and at least one bent conduit arrangement arranged inside said housing to extend in a direction from the first end of the housing to a second end of the housing, whereby said flow of air will pass along the bent conduit arrangement when said flow of air is received by said housing, wherein said at least one bent conduit arrangement comprises at least a first conduit and a second conduit arranged in a bent pattern extending in the direction of the bent conduit arrangement parallel to the flow of air or tilted at a small angle relative the direction of the flow of air, wherein the first conduit is arranged interleaved with the second conduit, wherein the bent pattern comprises bent sections and straight sections, the straight sections being arranged horizontally and in a first direction relative the flow of air.

For the context of the teachings herein, horizontal should be understood to be in the range of 2 to -2 degrees seen in the direction of flow of air.

As the bent conduit arrangements are arranged parallel to the flow of air, the bent sections will also be arranged substantially horizontal. This insightful arrangement of the bent conduits being arranged horizontally enables for the fluid to be transported through the conduits at a minimum or at least reduced pressure drop. Furthermore, interleaving the conduits enables a greater number of conduits to be used (and at greater length) than prior art systems using the same amount of energy to pump the fluid. This provides for an increased heat exchange (as the heat exchange surface is increased substantially compared to prior art systems using the same amount of energy) making the battery device according to the teachings herein highly energy efficient, especially compared to prior art systems.

The battery device comprises at least two bent conduit arrangements wherein a first bent conduit arrangement is arranged parallel to a second bent conduit arrangement at a vertical distance. The flow of air is thus enabled to pass through the battery device substantially unhindered, while still providing a sufficient surface for heat exchange between the flow of air and the fluid due to the insightful arrangement of the bent conduit arrangements. Furthermore, most, if not all, of the (unwanted) particles in the flow of air will thus also pass through the battery device without colliding with the internal structure of the battery device and clogging up the battery device. The battery device according to herein thus does not require any pre filtering as in prior art systems.

The battery device according to herein is arranged to be highly efficient providing for a minimum in pressure drop both in the fluid and in the exhaust air while providing a maximum heat exchange. The battery device according to herein also does not need any pre-filtering. The battery device is also easy to manufacture and assemble and enables for operation using a minimum of energy.

One aspect of the invention is to utilize a battery device as herein in a ventilation system (as herein) as an energy battery to facilitate additional recycling of the energy in the ventilation system, thus reducing the amount of energy having to be purchased from a utility company and also eliminate or at least reduce the need for any pre-filtering.

At least one of said at least one conduit arrangement comprises at least a first conduit and a second conduit, wherein the first conduit is arranged interleaved with the second conduit.

A first conduit arrangement is arranged parallel to a second conduit arrangement at a vertical distance (D3). In one embodiment the battery device further comprises a distribution conduit arranged at the second end of the housing to distribute a fluid to each conduit of the bent conduit arrangement and a collection conduit arranged at the first end of the housing to collect the fluid after it has been transported through said conduits.

In one embodiment the battery device is connected to a heat exchange system.

In one embodiment at least one conduit arrangement is provided by a 3D printer.

Other embodiments are disclosed in the detailed description and in the attached claims and other benefits are also disclosed in the description herein.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a schematic view of a ventilation system according to an embodiment of the invention,
Fig. 2 is a schematic view from above of a bent conduit arrangement according to one embodiment of the teachings herein to be used in a battery device according to an embodiment of the invention used in the ventilation system in Fig. 1,
Fig. 3 A is a schematic view of an alternative bent conduit arrangement not part of the invention,
Fig. 3B is a schematic view of an alternative bent conduit arrangement not part of the invention,
Fig. 4 is a schematic view of an arrangement of bent conduit arrangements according to one embodiment of the teachings herein,
Fig. 5 is a schematic view of an arrangement of bent conduit arrangements according to one embodiment of the teachings herein,
Fig. 6 is a schematic side view of a bent conduit arrangement according to one embodiment of the teachings herein,
Fig. 7 is a schematic view of an assembly of supports to be used with bent conduit arrangements according to one embodiment of the teachings herein,
Fig. 8 is a schematic view of how a plurality of supports can be used in a bent conduit arrangement according to one embodiment of the teachings herein,
Fig. 9 is a schematic view of a ventilation system according to an embodiment of the invention,
Fig. 10 is a schematic side view of a conduit arrangement according to one embodiment of the teachings herein,
Fig. 11 is a schematic view of a 3D printer utilized for providing at least one conduit arrangement according to one embodiment of the teachings herein,
Fig. 12 is a flowchart of a general method for utilizing a 3D printer for providing at least one conduit arrangement according to one embodiment of the teachings herein, and
Fig. 13 is a schematic view of a heat exchanger constructed along the principals according to one embodiment of the teachings herein.

### DETAILED DESCRIPTION OF EMBODIMENTS

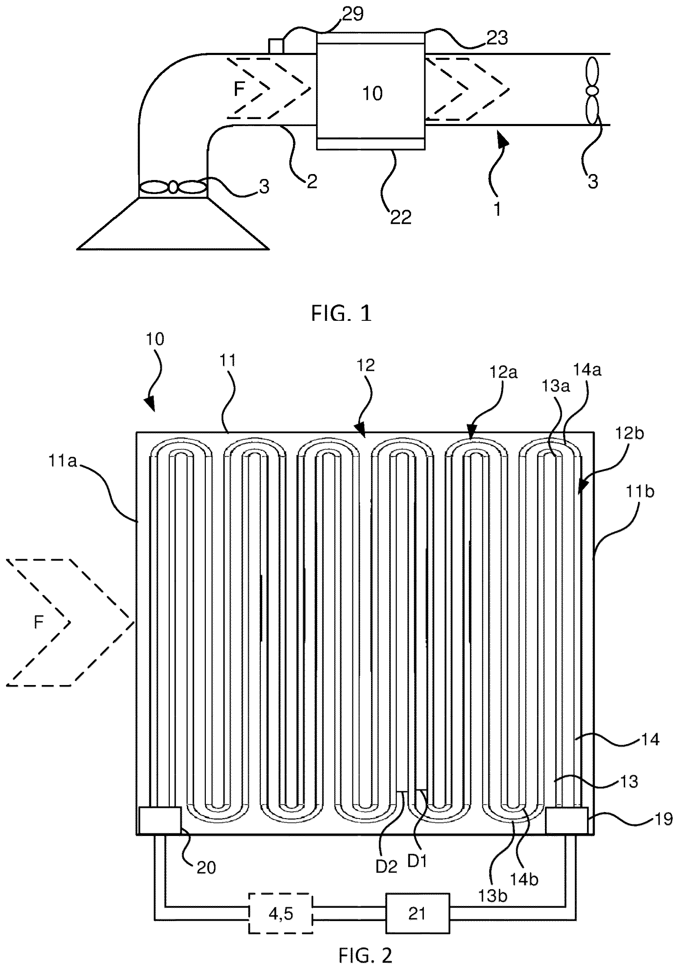

With reference to the drawings, figure 1 is a schematic side-view of a ventilations system 1 with a duct 2 and a battery device 10 arranged along the duct 2 so that the duct 2 may lead exhaust air through the battery device 10. The ventilation system 1 as such can be any known type of ventilation system and is not limiting the features of the battery device 10. The ventilation system 1 can even be located in an environment where exhaust air contains unwanted particles such as grease, zoot, dust, salt, lint or other types of particles which needs to be effectively managed. Such an environment can for example be a marine environment, dryer system or large scale restaurant kitchen, a bakery or any other where unwanted particles are created during use.

These types of particles may be of different sizes and shapes. A typical range of particle sizes for more than 95% of the sample mass of a troublesome pollutant - grease - is from 2 pm up to 25 pm.

The battery device 10 is designed and arranged to receive a flow F of air, such as exhaust air possibly containing unwanted particles (not shown in figure 1), flowing through the duct 2 of the ventilation system 1. The flow F of air is achieved and/or enforced by a fan unit 3. The fan unit may be located towards the front-end and/or the back-end of the ventilation duct 2. The fan unit 3 can be any type of fan unit used in ventilation systems today. The battery device 10 presented below is enabled to extract energy from the flow of exhaust air due to temperature differences between the flow of air and the conduits of the battery device 10 that the air passes through. This is explained in more detail below. The battery device 10 presented below is also able to keep the battery device clean enough for efficient operation in contaminated exhaust air, without the need for any pre-filtration. That is, the battery device according to the present invention is efficient and robust enough to operate even when no pre-filtration is provided, as the structure of the battery device 10 according to herein is not prone to clogging. The battery device according to herein is also able to self-clean any particles that do adhere to the metal surfaces of the battery device. The extracted energy may then be re-distributed into the energy system of a building, for example in the building in which the ventilation system is installed, utilizing the extracted energy where it is needed and/or beneficial. The extracted energy may also or alternatively be redistributed to other systems as needed.

In order to achieve the above purposes, the battery device 10 includes a plurality of conduits 13,14 through which the exhaust air flows. The conduits 13,14 are arranged in horizontally arranged bent conduit arrangements 12.

Figure 2 shows a schematic top view of a battery device 10 according to the teachings herein. As can be seen, the battery device 10 comprises a bent conduit arrangement 12 comprising two conduits, a first conduit 13 and a second conduit 14. It should be noted that even though only one bent conduit arrangement 12 is shown in figure 2, this is purely for illustrative purposes, and a battery device 10 would comprise a plurality of bent conduit arrangements 12, as will be illustrated below. It should also be noted that even though the bent conduit arrangement 12 is exemplified as having two conduits, a bent conduit arrangement may comprise three, four or even more conduits, as will also be illustrated below. As can be seen in figure 2, the battery device is arranged to receive a flow of (exhaust) air, referenced 'F', through a first end 1a, to guide the flow F over the bent conduit arrangement 12 and then out of the second end 1b of the battery device 10.

The bent conduit arrangement extends in a direction substantially parallel to the flow of the air, and horizontally, comprising a plurality of straight sections 12b of conduit that are arranged substantially perpendicular to the flow of air, also horizontally.

The first conduit 13 and the second conduit 14 of the bent conduit arrangement 12 of figure 2 are interleaved so that they run substantially parallel in substantially the same horizontal plane (with reservations to manufacturing variations) back and forth across the flow F of air. This enables for a large surface of the conduits to interact with the flow of air using only a small volume for the battery device 10.

Compared to using a single conduit that is bent more times and allowed to run back and forth across the flow of air, the use of several conduits reduces the pressure drop in each conduit, thereby reducing the energy needed to pump a fluid through the conduits, thereby also reducing the energy consumption of the battery device 10. The straight sections 12b are connected by bent sections 12a. In one embodiment, the straight sections 12b and the bent sections 12a are made of separate pieces that are to be joined.

In one embodiment, the straight sections 12b and the bent sections 12a of at least one conduit are formed by the same conduit, by the conduit being bent or bent repeatedly. This has the benefit of reducing the time and cost for manufacturing and assembling the battery device.

In one embodiment, the straight sections 12b and the bent sections 12a of at least one conduit are formed by the one or more conduits, by the conduits being bent or bent repeatedly and joined together.

Using bent conduits also has the benefit in simplifying the distribution and collection of cooling fluids. As the conduits are bent, only one point of distributing and one point for collecting are needed, which reduces the cost for manufacturing the collection and distribution conduits as well as assembling the battery device 10. As will be clear from the below, using the same collection and distribution conduits for several bent conduit arrangements also reduces the cost for manufacturing and assembling the battery device.

As the conduits 13, 14 are arranged horizontally, the bent sections will also be arranged horizontally. This ensures that no air (or other gas) bubbles are captured in the bends, which ensures that the work required for the pump that circulates the cooling fluid is maintained at an acceptable level and that the pressure drop in the conduits is kept low.

In order for the first and second conduits to be interleaved, the bent sections 12a are made up of bent sections 13a, 13b, 14a, 14b for the first and the second conduits that are repeated alternatingly. In the example of figure 2, the first conduit 13 comprises a first bent section 13a and a second bent section 13b, wherein the first bent section 13a is arranged on one side of the bent conduit arrangement 12, and the second bent section 13b is arranged on the opposite side of the bent conduit arrangement 12. Likewise, the second conduit 14 comprises a first bent section 14a and a second bent section 14b, wherein the first bent section 14a is arranged on one side of the bent conduit arrangement 12, and the second bent section 14b is arranged on the opposite side of the bent conduit arrangement 12. The first and the second bent sections are repeated alternatingly across the length of the conduit and the bent conduit arrangement 12. In the example of figure 2, the first bent section 13a of the first conduit 13 matches the first bent section 14a of the second conduit 14 in such a manner that the first conduit 13 runs parallel - or substantially equidistant - to the second conduit 14 also through the bent section 12a.

In the example of figure 2, the first bent section 13a of the first conduit 13 equals the second bent section 14b of the second conduit 14, and the first bent section 14a of the second conduit 14 equals the second bent section 13b of the first conduit 13. In one embodiment a bent section may be a radially curved portion of conduit.

In one embodiment a bent section may be a bent portion of conduit.

In one embodiment a bent section may be a bent portion followed by a straight portion followed by another bent portion.

In one embodiment, the bent sections are arranged to be substantially 180 degrees, seen from an inlet of the bent section to an outlet of the bent section. In one embodiment, the bent sections are arranged to be in the range 178-182 degrees. In one embodiment, the bent sections are arranged to be in the range 175-185 degrees. In one embodiment, the bent sections are arranged to be in the range 170-190 degrees. In one embodiment, the bent sections are arranged to be in the range 160-200 degrees. The greater the angle of a bent section, the area of the straight sections can be housed in a given area/volume. The smaller the angle, the less drop in pressure of the fluid. The angles possible are also dependent on the length of the straight sections and the distance between the straight sections. A compromise may therefore be made and the inventors have found that an angle of 180 degrees provide for a good compromise that is also easy to install.

For an angle differing from 180 degrees, the straight sections may not be truly parallel, but will be discussed herein as being parallel in the meaning that they run in the same horizontal plane.

The bent sections may be continuous (or smooth). The bent sections may also or alternatively be discontinuous. In one such embodiment, the bent section is stepwise discontinuous using substantially straight portions. In one alternative or additional such embodiment, the bent section is stepwise discontinuous using substantially straight portions connected by smooth bends.

A bent section thus comprises at least one bent portion and possibly one or more straight portions. A straight portion need not be strictly straight, but can be a portion having a curvature with a large radius.

In one embodiment, the bent sections are arranged to be semi-oval.

In one embodiment, the bent sections are arranged to be semi-circular.

In one embodiment, the bent sections are arranged to be U-shaped.

In one embodiment, each bent conduit arrangement 12 comprises more than 5 bent sections for each conduit 13, 14. In one such embodiment, each bent conduit arrangement 12 comprises more than 9 bent sections for each conduit 13, 14. In one such embodiment, each bent conduit arrangement 12 comprises more than 15 bent sections for each conduit 13, 14. In one such embodiment, each bent conduit arrangement 12 comprises more than 25 bent sections for each conduit 13, 14. In one such embodiment, each bent conduit arrangement 12 comprises more than 35 bent sections for each conduit 13, 14.

A conduit may have bent sections of the same type or of varying or different types.

As the number of bent sections for a conduit grows, the surface for heat exchange also grows. However, the pressure drop for the fluid in the conduit will also grow. Therefore, as the inventors have realized, it is better to use interleaved conduits instead of increasing the length (number of bent sections) of a conduit, as the surface for heat exchange will remain the same, while not increasing the pressure drop for the fluid.

In order for the conduits to be interleaved, the first and second bent sections for the first conduit are not of the same radius or extent in the case of a non-radially curved bent section, one bent section being smaller than the other to enable the interleaving of conduits 13, 14, by one bent section partially encompassing the other bent section.

In one embodiment, a bent section of a first conduit is arranged to match a corresponding bent section of the second conduit by the conduits being at an equal distance (equidistant) to each other through the bent section. In one embodiment, a bent section of a first conduit is arranged to match a corresponding bent section of the second conduit by the outer conduit being arranged to accommodate or partially enclose the inner conduit through the bent section.

In one embodiment, the bending radius of the smaller bent section is equal to 1.5 to 2.5 times the diameter of the conduit. In one embodiment, the bending radius of the smaller bent section is equal to 1.75 to 2.25 times the diameter of the conduit In one embodiment, the bending radius of the smaller bent section is equal to or larger than twice the diameter of the conduit.

This ensures that any fluid that is transported through the conduit will travel unhindered and decreases the turbulence in the conduit.

In one embodiment, the bent section of the smaller bent section is made utilizing bending machines based on a technique not deforming the inner radius of the bent section, for example booster functionality. In such an embodiment, the bent section radius may be smaller than twice the diameter of the conduit. The pairs of conduits (i.e. the first and the second conduits) making up a straight section 12b is arranged at a section distance (indicated D2 in figure 2) from another pair of conduits, i.e. the next section. By placing the straight sections at a distance from one another enables the passing air to enter this void so that any turbulence caused by the conduits may evolve and also increases the exposed surface between the air in the air flow F and the conduits 13, 14, which increases the heat exchange between the fluid in the conduits and the air.

In one embodiment the section distance is 14 mm. In one embodiment the section distance is in the range 12 to 16 mm. In one embodiment the section distance is in the range 10 to 20 mm. In one embodiment the section distance is in the range 5 to 30 mm.

In one embodiment the section distance is dependent on the diameter of the conduit. In one such embodiment the section distance is in the range 2-5 times the diameter of the conduit. In one such embodiment the section distance is in the range 2-3 times the diameter of the conduit. In one such embodiment the section distance is 2 times the diameter of the conduit. Along the straight sections, the first and second conduits 13, 14 are arranged at conduit distance (indicated D1 in figure 2) from one another. For straight sections not running parallel, the distance is an average or a mid-point distance. By keeping the conduit distance low, more conduits may be housed in the same area, thus increasing the use of space making the battery device smaller for the same number of straight sections and conduit surface exposed to the flow of air. The conduit distance D1 is therefore smaller than or equal to the section distance D2.

In one embodiment the conduit distance is 14 mm. In one embodiment the conduit distance is in the range 12 to 16 mm. In one embodiment the conduit distance is in the range 10 to 20 mm. In one embodiment the conduit distance is in the range 5 to 30 mm.

In one embodiment the conduit distance is dependent on the diameter of the conduit. In one such embodiment the conduit distance is in the range 2-5 times the diameter of the conduit. In one such embodiment the conduit distance is in the range 2-3 times the diameter of the conduit. In one such embodiment the conduit distance is 2 times the diameter of the conduit.

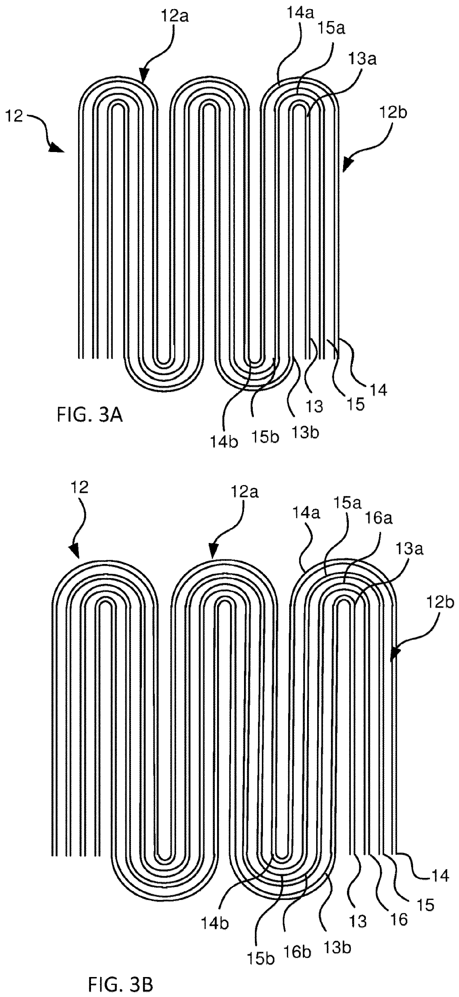

Figures 3A and 3B each show a schematic top-view of an alternative embodiment of a bent conduit arrangement 12. As mentioned above, a bent conduit arrangement 12 may comprise more than two conduits, and figure 3A shows an alternative where a bent conduit arrangement 12 comprises a first conduit 13, a second conduit 14 and a third conduit 15. As can be seen, the conduits are approximately equidistant in the bent sections 12a and parallel in the straight sections 12b. The third conduit 15 is arranged between the first conduit 13 and the second conduit 14. The third conduit 15 is, in one embodiment, arranged with a bent section that is repeated over the third conduit's extension in the bent conduit arrangement 12.

Figure 3B shows an alternative where a bent conduit arrangement 12 comprises a first conduit 13, a second conduit 14, a third conduit 15 and a fourth conduit 16. As can be seen, the conduits are approximately equidistant in the bent sections 12a and parallel in the straight sections 12b. As can be seen, the fourth conduit 16 is arranged in between the first conduit 13 and the second 14 adjacent the third conduit 15. In one embodiment, the third conduit 15 is arranged bent utilizing a first 15a and a second 15b bent section, the fourth conduit 16 is arranged bent utilizing a first 16a and a second 16b bent section, wherein the first bent section 15a of the third conduit 15 corresponds to the first bent section 16a of the fourth conduit 16 and the second bent section 15b of the third conduit 15 corresponds to the second bent section 16b of the fourth conduit 16.

In one embodiment, two (or more) bent conduit arrangements may be arranged nestled or interleaved as an alternative or in addition to, having more conduits in the bent conduit arrangement. In such an embodiment, the section distance will then vary between sections to accommodate a section from the nestled bent conduit arrangement.

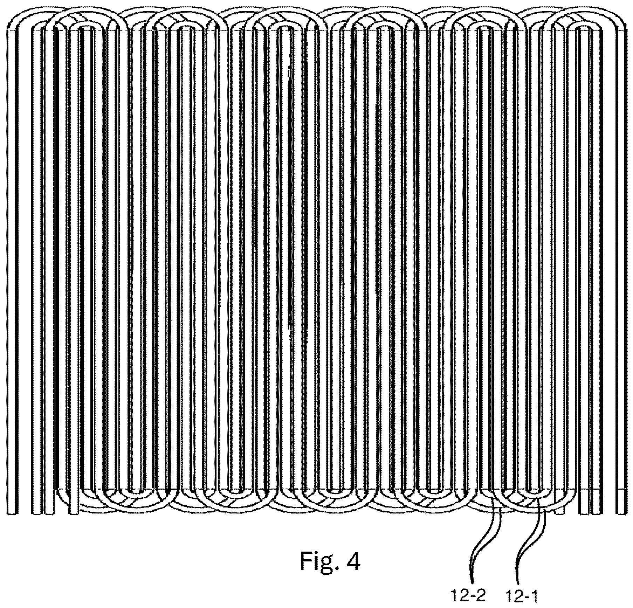

As mentioned above, a battery device 10 according to the teachings herein comprises more than one bent conduit arrangement 12, and figure 4 shows a schematic top-view of a battery device 10 comprising a first bent conduit arrangement 12-1 and a second bent conduit arrangement 12-2. For illustrative purposes only two bent conduit arrangements are shown in figure 4. As can be seen the first bent conduit arrangement 12-1 is arranged on top of the second bent conduit arrangement 12-2. By stacking the bent conduit arrangements on top of one another, several bent conduit arrangements 12 may be housed in the same battery device 10.

In one embodiment, the first bent conduit arrangement 12-1 is arranged straight on top of the second bent conduit arrangement 12-2. This has the benefit of making the overall size of the battery device, and the size of the distribution and collection conduits small.

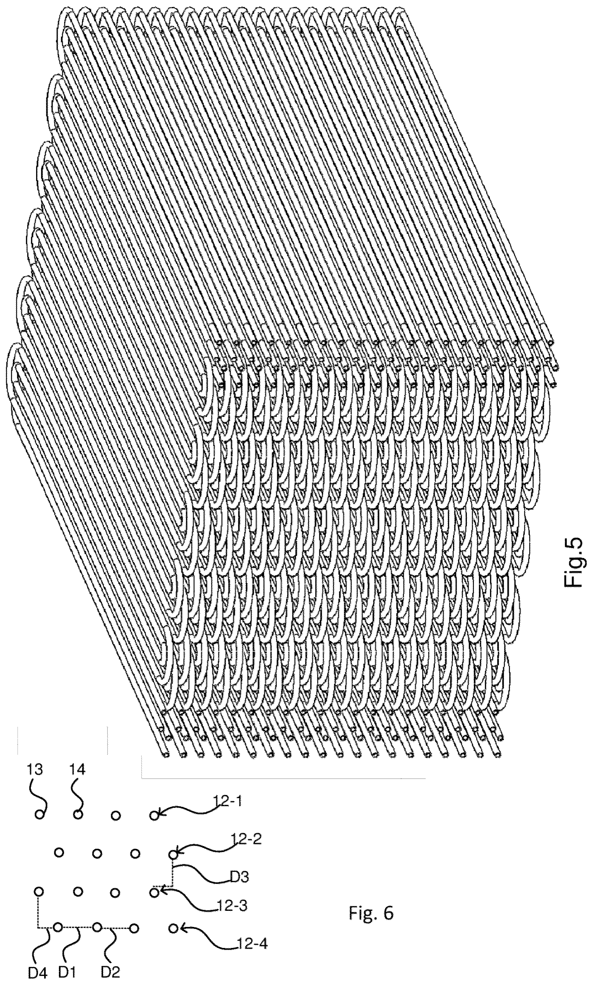

In one embodiment, the first bent conduit arrangement 12-1 is arranged on top of the second bent conduit arrangement 12-2, but offset in the direction of the flow of air. In one embodiment, the first bent conduit arrangement 12-1 is offset the second bent conduit arrangement 12-2 by an offset distance (referenced D4 in figure 6). This has the benefit of reducing the turbulence created between the bent conduit arrangements when the flow of air is received, thereby allowing for a minimized pressure drop.

In one embodiment the offset distance is 14 mm. In one embodiment the offset distance is in the range 12 to 16 mm. In one embodiment the offset distance is in the range 10 to 20 mm. In one embodiment the offset distance is in the range 5 to 30 mm. In one embodiment the offset distance is dependent on the diameter of the conduit. In one such embodiment the offset distance is in the range 2-5 times the diameter of the conduit. In one such embodiment the offset distance is in the range 2-3 times the diameter of the conduit. In one such embodiment the offset distance is 2 times the diameter of the conduit.

The first bent conduit arrangement 12-1 is arranged at a vertical distance D3 from the second bent conduit arrangement 12-2.

In one embodiment, the vertical distance D3 is 3 to 7 mm. In one embodiment, the vertical distance is 5 mm. In one embodiment, the vertical distance D3 is proportional to the diameter of the conduit. In one such embodiment, the vertical distance D3 is in the range 0.5 to 1 times the diameter of the conduit.

The vertical distance D3 is, in one embodiment, a minimum distance between the two bent conduit arrangements. Some conduits may be at a larger distance from one another, but not a smaller.

The vertical distance D3 is, in one embodiment, an average distance between the two bent conduit arrangements.

By ensuring a (minimum) vertical distance between the bent conduit arrangements, the flow of air is provided with passages to flow through, thereby reducing the pressure drop and/or the power needed to drive the flow of air through the battery device and the pressure drop of the air flow can be kept at a low and acceptable level. The actual minimum distance needed depends on the air flow and the required minimum pressure drop.

Figure 5 shows a schematic side-view of an arrangement of bent conduit arrangements 12 comprising a realistic number of bent conduit arrangements 12. In the example of figure 5, there are forty (40) bent conduit arrangements 12 all stacked and alternatingly offset one another.

Figure 6 shows a schematic side-view of a cross-sectional cut-out, showing the openings of the conduits 13, 14 of several bent conduit arrangements 12-1-12-4. In figure 6, the various distances D1-D4 are shown, and in the example of figure 6, the distances D1-D3 are substantially equal and the offset distance D4 approximately equaling half the other distances (D4=D1/2).

In one embodiment a battery device 10 according to herein comprises 30 to 80 bent conduit arrangements, each comprising 10 to 20 bent sections.

Utilizing a battery device as per herein, has several benefits, and provides an improved heat exchange. This improved heat exchange is in part due to the arrangement of the bent conduits and the relationship between the distances between the conduits. The heat exchange in a battery device as per herein has been found to be so efficient that the actual material of the conduits is of less importance. However, in one embodiment, the conduit is made of brass or a brass alloy. In one embodiment, the conduit is made of an aluminum alloy. In one embodiment, the conduit is made of a copper or copper alloy. In one embodiment, the conduit is made of stainless steel. In one embodiment, the conduit is made of plastic.

In one embodiment, the bent conduit arrangements are kept in place by their connections to the distribution 19 and collection conduits 20. In one embodiment, the bent conduit arrangements 12 are kept at the minimum distance from one another also by supports 17 being arranged between at least some of the bent conduit arrangements 12. This has the benefit that the conduits may be made of thinner material and especially that the connections to the distribution and collection conduits may be made less robust.

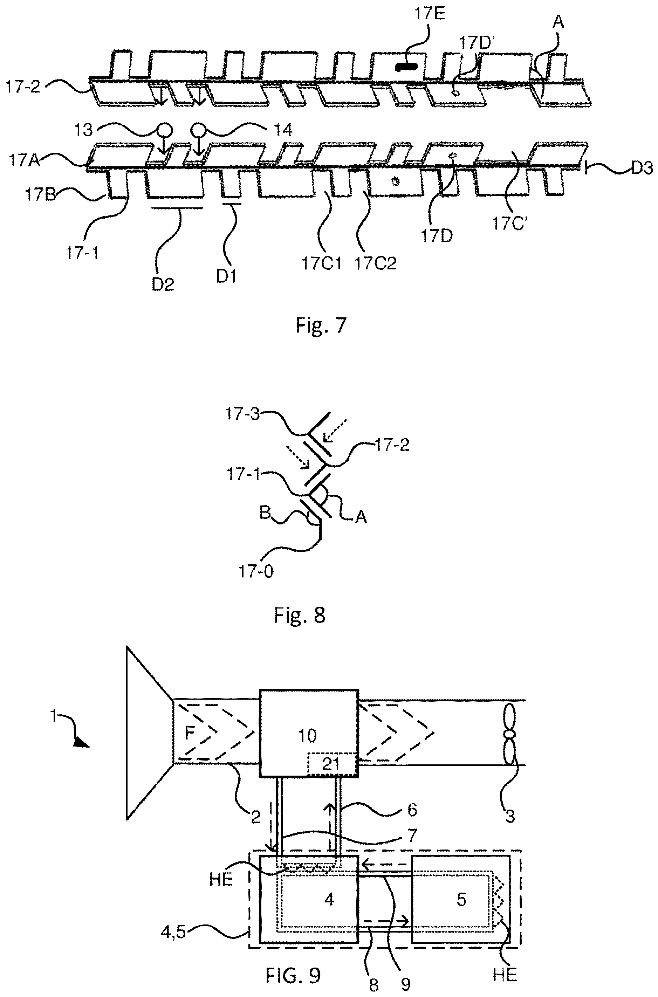

Figure 7 shows a schematic side view of two supports 17-1 and 17-2. Each support is arranged with a first (upper) side 17A and a second (lower) side 17B. At least one side is arranged with at least one cut-out 17C, that may be circular, semi-circular, rectangular, U-shaped or otherwise shaped and sized to receive a conduit 13, 14 (or 15, 16 not shown in figure 7). It should be noted that the length of the supports may vary as per the length of the bent conduit arrangement 12, and the length in figure 7 is chosen for illustrative purposes and is arranged to hold 4 to 5 straight sections.

In one embodiment, the cut-outs 17C are arranged in groups, where the number of cut-outs in the group correspond to the number of conduits in the bent conduit arrangement. In the example shown in figure 7, there are two cutouts 17C1 and 17C2 in each group. The distance between each cutout 17C in a group substantially corresponds
(within variances due to machining and to allow for tolerances) to the distance between conduits in a straight section; D1. The distance between each cutout group substantially corresponds (within variances due to machining and to allow for tolerances) to the distance between straight sections; D2. The distance between cutouts 17C in a first side 17A and the cutouts in a second side 17B of a support 17 group substantially corresponds (within variances due to machining and to allow for tolerances) to the distance between bent conduit arrangements; D3.

In one embodiment, the cutouts 17C are sized and shaped to receive each a conduit 13, 14 of each straight section. In figure 7, this is indicated by cutouts 170, 17C2. This enables a more stable arrangement, preventing or reducing any vibration in the conduits.

In one embodiment, the cutouts 17C are sized and shaped to receive a conduit section, i.e. the first, second and so on conduit of each straight section. In figure 7, this is indicated by cutout 17C'. This enables a lighter support (saving on materials cost) and an easier mounting. As is disclosed with relation to the conduit distance D1 and the section distance D2 above, the cutout distances may also be equal.

When mounting the bent conduit arrangements 12and the supports 17, the conduits 13,14 of a first bent conduit arrangement 12 (not shown in figure 7) are mounted or placed within the cutouts 17C (such as 170, 17C2, 17C') of a first (upper) side 17A of a first (lower) support 17-1, as indicated by the arrows in figure 7. A second (upper) support 17-2 is then placed on top so that the cutouts 17C of the second (lower) side 17B of the second (upper) support 17-2 receives the conduits 13, 14, as indicated by the arrows in figure 7. As can be seen in figure 7, the sections between cutouts may overlap, in one embodiment, when the supports are mounted.

In one embodiment, there is arranged a hole 17D in at least one section between two cutouts 17C in the first support 17-1. In one such embodiment, there is arranged a corresponding hole 17D' in a corresponding section between two cutouts 17C in the second support 17-2. In an alternative or additional such embodiment, there is arranged a corresponding pin 17E in a corresponding section between two cutouts 17C in the second support 17-2.

By aligning a hole 17D with a corresponding hole 17D, the two supports 17-1 and 17-2 may be attached to one another by inserting a screw, pin, bolt or other attachment means (not shown) through the holes 17D and 17D' Alternatively or additionally, the pin 17E is inserted into and through the hole 17D to attach the two supports.

By attaching the supports to one another, a more stable arrangement is provided.

In one embodiment, as shown in figure 7, the first side 17A and the second side 17B of a support 17 are arranged at a support angle A to one another. This enables an easier assembly or mounting as the attachment means may be inserted from above at an angle, instead of from the side, which at mounting is inside the bent conduit arrangement 12.

In one embodiment, the cutouts 17C are rectangular. In one embodiment, the cutouts 17C are U-shaped. In one embodiment, the cutouts 17C are semi-circular. Figure 8 shows a schematic view of how a plurality of supports 17-1, 17-2, 17- 3 may be mounted with relation to one another, where the supports may be joined at an angle, as indicated by the dashed arrows.

In one embodiment, there may be a base support 17-0 at the lower or upper end of the arrangement for simplifying the mounting as if the support is leaned at an angle to a supporting structure it will not stand by itself until it is joined to another support. In one embodiment, such base support 17-0 is part of, comprised in or joined to the housing 11. In one embodiment, the base support 17-0 is arranged so that the upper side 17A is arranged with cutouts 17C (and the lower is not, apart from cutouts for reducing the weight or receiving other structures). In one embodiment, the base support 17-0 is arranged so that the upper side 17A is arranged at a second angle B relative the lower part, where the second angle B substantially equals half the angle A plus 90 degrees.

Returning to figure 1, the battery device 10 is, in one embodiment, arranged in a ventilation system 1. However, it should be noted that the battery device may be arranged in any system, where energy is to be extracted from an air (or other gas) flow.

In operation, the battery device 10 further comprises a fluid that the battery device is arranged to receive, such as a refrigerant. The fluid is to be transported through the conduits 13, 14. In one embodiment, the fluid is brine. The fluid is, in one embodiment, configured to cool the conduits 13, 14 which in turn will cool the surrounding exhaust air. It should be noted that the fluid may alternatively be used to heat the conduits. A common temperature of such a flow F of exhaust air is between 20°C and 32°C and a common temperature of the transported fluid is between -10°C and 20°C which means that a temperature drop of between 4°C and 18°C of the exhaust air can be achieved. Thus, the (cooling) fluid and the arrangement of conduits 13, 14 are configured to extract energy from the flow F of exhaust air by cooling the exhaust air, and also by extracting the energy released as parts of the water content in the exhaust air condensates.

In prior art battery devices, a pre-filtration is required as the battery devices will otherwise clog up too quickly to operate efficiently. The battery device 10 of the present invention is, however, constructed in such a manner that no pre-filtering is needed. The design of the battery device disclosed herein minimizes the pressure drop of the flow of air, and thus allows the flow of air to pass (relatively) unhindered.

This is enabled by the bent section arrangement's aerodynamic qualities which allows for the flow of air to pass (relatively) unhindered through the battery device thereby allowing the pollution particles (e.g. grease, soot, moisture, etc.) to also pass through the battery device, without colliding with and adhering to the internal structure (bent section arrangements and so on) of the battery device 10, preventing or at least reducing the risk of the battery device clogging up.

The battery device 10 is thus capable of operating in contaminated air without the need for pre-filtering.

Returning to the battery device 10 the cooling fluid is arranged to run in a closed loop between the conduits 13, 14 of the battery device 10 and an optional thereto connected pump by means of two pipes. The pump can be replaced by for example a heat exchanger, a heat pump or any other suitable device, such as the heating system 4,5 discussed below, but for now will be referred to as a pump. The pump feeds the cooling fluid which has been cooled to the right temperature. A preferred temperature of the cooling fluid when entering the battery device 10 is between -10°C and 20°C. As the cooling fluid has passed through the conduits 13, 14 of the battery device 10 and cooled the conduits 13, 14, the cooling fluid returning now has a higher temperature. The cooling fluid is, within the closed loop, again cooled to the right temperature by any suitable device before returning to the battery device 10 and the conduits 13, 14. The difference in temperature between the cooling fluid and the returning cooling fluid can be between 4°C and 18°C. The extracted energy from the flowing exhaust air can be used to reduce the energy consumption of the overall system, for example, heat the building or room in which the ventilation system 1 operates. It should also be noted, as discussed above, that the teachings herein may equally well be applied in a cooling system, where energy is extracted and reused for cooling.

Figure 9 shows a schematic view of a system 1, where a battery device 10 in a ventilation system, such as that of figure 1, is used as a battery device for heat exchange system 4, 5. It should be noted that many variations are possible for connecting the battery device of the present invention with a heat exchange system and figure 9 only shows one example. In one example, the heat exchange system is a heating system, where energy is extracted and reused for heating. It should also be noted, as discussed above, that the teachings herein may equally well be applied in a cooling system, where energy is extracted and reused for cooling. The heat exchange system 4, 5 generally comprises a first unit 4 and a second unit 5. In one embodiment, the first unit 4 is a pump arranged to receive a fluid from the battery device 10 through conduit 7 and transport the fluid to the second unit 5 through conduit 8. In such an embodiment the fluid of the battery device is allowed to undergo heat exchange (HE) with a medium of the heat exchange system, for example for heating or cooling supply air thereby recycling or reusing the energy extracted by the battery device. The fluid is then returned to the battery device through conduits 9 and 6.

In one embodiment the first unit is a heat pump arranged to receive and return a fluid from the battery device 10 through conduits 6 and 7 and allow the fluid received from the battery device 10 to undergo heat exchange (HE) with a fluid of the heat exchange system which is transported between the first unit 4 and the second unit 5 through conduits 8 and 9. In such an embodiment the fluid of the heat exchange system is then allowed to undergo heat exchange with a medium of the heat exchange system, for example for heating or cooling supply air thereby recycling or reusing the energy extracted by the battery device. Such heat exchange systems 4, 5 are known and require no further explanation, and it should be noted that since they are so well-known many details and variations have been left out for reasons of conciseness. For example, in the embodiment where the first unit 4 is a pump, the pump of the heat exchange system may be implemented or replaced by a pump 21 of the battery device 10, the two systems sharing a pump. Returning to figure 2, the battery device 10 further has a distribution conduit 19 arranged to receive the fluid (cooling fluid in the example of a heating system and heating fluid in the example of a cooling system) from the pump 21. As is indicated in figure 2 by the dashed box referenced 4,5, the fluid may also be pumped through an additional or external system 4,5 as discussed in relation to figure 9. The distribution conduit 19 is arranged to distribute the fluid to each one - or at least a plurality - of the conduits 13, 14 of a bent conduit arrangement 12. Further, the battery device 10 includes a collection conduit 20 arranged to receive the fluid after it has been transported through the conduits 13, 14 of a bent conduit arrangement 12 and return it to the pump 21, possibly via a heating system 4,5.

In one embodiment the distribution conduit 19 is arranged to distribute the fluid to a plurality of bent conduit arrangements 12, and in one such embodiment the distribution conduit 19 is arranged to distribute the fluid to all of the bent conduit arrangements 12 of the battery device 10.

Similarly, in one embodiment the collection conduit 20 is arranged to collect the fluid from a plurality of bent conduit arrangements 12, and in one such embodiment the collection conduit 20 is arranged to collect the fluid from all of the bent conduit arrangements 12 of the battery device 10.

Such collective distribution and collection is made possible by the clever arrangement of bent conduit arrangements, enabling for a minimum pressure drop in the fluid. This also enables for a simplified manufacturing and installation. In the example embodiment of figure 2, the distribution conduit 19 is arranged downstream of the flow of air F, and the collection conduit 20 is arranged upstream. This enables a more efficient heat exchange.

A water distribution device, here called a sprinkler device 23 may further be included in either the battery device 10 and/or in the ventilation system 1. Advantageously, the sprinkler device 23 can gather heated water from a chamber 22 for cleaning the battery device 10.

A shunting valve 29 may also be arranged in the ventilation system 1.

The battery device 10 as described above has many advantages. The battery device 10 may extract energy to be further used in a heating system, even without pre- filtering. In known ventilation systems these two features (the (heat) battery and the pre filtering) are separate, using two different units to accomplish both filtering and energy extracting. This has not been beneficial since, for example, the amount of necessary cleaning and maintenance work that needs to be done regularly is too extensive and not as efficient as with the battery device 10 presented above. Also, the pre-filtering brings about an unavoidable pressure drop in the flow of air, which either leads to a lower efficiency of the heat exchange in the battery device, or must be compensated for, which increases the power consumption of the system, also leading to a lower energy efficiency of the system. Often the unit enabling the energy extraction is not suited to handle unwanted particles such as grease, soot and similar which, if they stick to the unit, also can affect the efficiency of it. Further, the filter units used today are not able to filter the flow of exhaust air such that the energy extracting unit is totally protected from the unwanted particles. By being robust enough to operate in unfiltered air, not only the efficiency of the ventilations system can be increased but also a less energy demanding fan unit can be used in the ventilation system. This is because the previously used energy extracting unit has created an obstacle in the course in which the exhaust air flows which in turn demands a stronger fan to create the desired flow.

As there will always be some degree of build-up of contaminants - even when using the clever arrangement of the bent conduit arrangements taught herein, the battery device 10 may also be arranged to be self-cleaning.

The battery device is configured to receive a flow of exhaust air containing pollutants, wherein said battery device comprises at least one conduit with an outer surface, the conduit being configured to have a first temperature and a second temperature, wherein when the conduit has the first temperature condensation and a particle layer of pollutants is formed on the outer surface of the conduit, and wherein when the conduit has the second temperature the condensation and the particle layer freezes and subsequently cracks such that the particle layer is detached from the conduit.

This is advantageous since the battery device stays clean and no aggregation of grease particles and other pollutants will clog the battery device. Since it is a self cleaning process, no aid from a person, or addition of any extra media or chemicals, is needed and the cleaning is performed automatically. To crack the formed layer of pollutants with freezing, results in an efficient cleaning process where no pollutant particles will remain on the surfaces in the battery device, as would be the issue if, for example the chosen method for cleaning would be to try to melt the adhered layer of pollutants off the conduits for example by hot water spray provided by the sprinkler device 23, or by running the fluid at a second (higher) temperature through the conduits. In one embodiment, there is provided a ventilation system, wherein the at least one conduit is arranged to receive a fluid, which is arranged to assume a first and a second fluid temperature, wherein when the fluid assumes the first fluid temperature, the conduit will assume the first temperature, and when the fluid assumes the second fluid temperature, the conduit will assume the second temperature.

In one embodiment the conduit is caused to assume the second conduit temperature by causing the fluid to assume the second fluid temperature by regulating the temperature of the fluid.

In one embodiment the conduit is caused to assume the second conduit temperature by regulating the airflow.

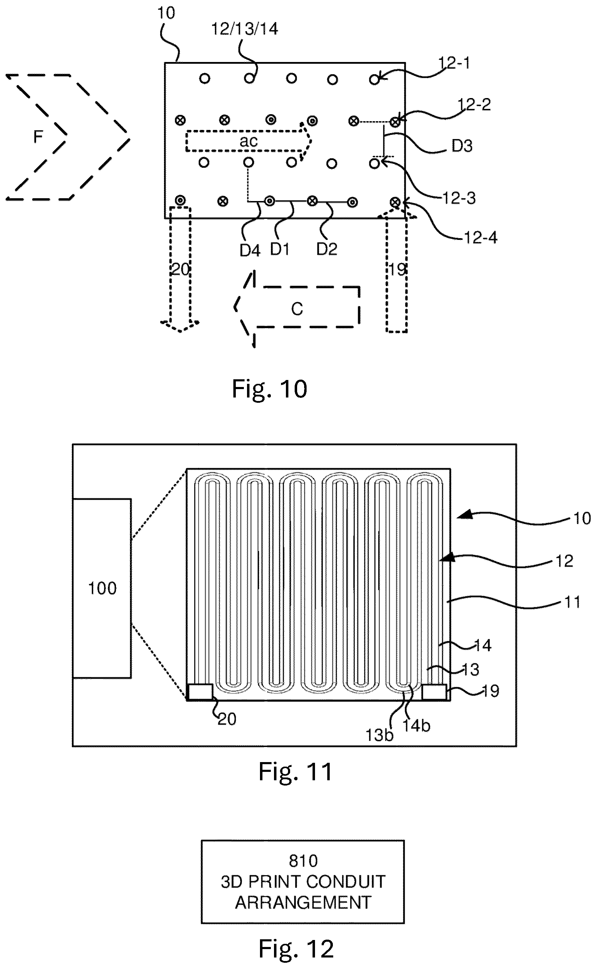

Figure10 shows a sideways view of a conduit arrangement 12 when used in a battery device 10 according to herein, the view explaining the main underlying principle of a conduit arrangement 12 according to herein, which conduit arrangement is highly energy efficient when acting as a battery device (as discussed herein). The schematic view of figure10 shows a sideways view of a conduit arrangement where any transport channels are omitted for visibility reasons. As in figure 6, the view shows a plurality of conduit arrangements 12-1, 12-2, 12-3, 12-4 arranged in relation to one another. Also as in figure 6, the direction of the flow of air (or other gas) is indicated by the big arrow marked "F". In figure10 the general direction of flow of the fluid in the conduits (i.e. the coolant) is also indicated with an arrow marked "C". The actual direction of flow of the coolant through the conduits is also indicated by alternating conduits 12 in the lower conduit arrangement 12-4 being marked with dots or x:es to indicate the direction of the flow in that specific conduit.

As can be seen in figure10 the flow of the air F is in a direction opposite to the main (or general) direction of the flow of the coolant C. This provides for an efficient heat exchange serving to increase the efficiency of the battery device 10 making it highly suitable for use as a battery device 10 in a ventilation system 1 (as in figures 1 or 9).

Further, and as in figure 6, the conduits are arranged substantially horizontally which minimizes the pressure needed to pump the coolant through the conduits and also reduces the impact that any air (or other gas) bubbles may have on the flow, which also minimizes the pressure needed to pump the fluid through the conduits also serving to increase the efficiency of the battery device 10 making it highly suitable for use as a battery device 10 in a ventilation system 1 (as in figure 9).

A battery device 10 for use in a ventilation system is thus provided according to the teachings herein where several conduits are arranged to transport a fluid (such as a coolant) in a main direction opposite the flow of air through the battery device, where the conduits are arranged substantially horizontally (within +/-5 degrees, +/- 2 degrees, +/- 1 degree or at 0 degrees) and substantially orthogonal (within +/-5 degrees, +/- 2 degrees, +/- 1 degree or at 0 degrees offset the orthogonal direction) to the flow of air.

As discussed, the conduits are connected with transport channels (not shown explicitly in figure10) that are also arranged substantially horizontally (within +/-5 degrees, +/- 2 degrees, +/- 1 degree or at 0 degrees). In some embodiments, at least one of the transport channels is arranged to extend above the conduits. This enables any air or other gas that has been introduced into the conduit system to be trapped in the transport channel for easy removal for example by simply airing the transport channel. As discussed above, the conduits of the battery device are in some embodiments interleaved. This is shown explicitly for the second row of conduits 12-2 in figure10, where it is shown that two conduits are transporting the fluid in each direction. A transport channel will thus serve not only a single pair of conduits (in/out), but will serve at least two conduit pairs (in/in/out/out), for example 2, 3 or 4 pairs of conduits. As discussed above a transport channel may comprise a bent section connecting each conduit pair (where conduits are interleaved by their physical arrangement and provision of fluid through a common distribution conduit 19), or be of a more general shape, such as a rectangular box, where the fluid from possibly multiple conduits enter and exit where the flow and direction of flow is controlled by the pressure of the fluid. By interleaving conduits, a larger surface area for heat exchange is achieved at a lower pressure drop compared to connecting the conduits in series as discussed above.

As with all other embodiments herein and in contrast to prior art filters, where the conduits are arranged to also enable the battery device to act as a filter, the conduits 12 of the battery device 10 according to herein are not arranged to block the path of particles. The inventors have realized that as the conduit arrangement according to herein does not need to filter the passing gas flow and that a sufficient degree of heat exchange may still be achieved through the arrangement of conduits. The same (or at least negligibly less efficient) heat exchange may be achieved even when allowing the passing gas flow to pass unhindered in some gas channels. These gas channels are provided for by the distancing of the adjacent conduit arrangements at a vertical distance from one another. This vertical distancing is indicated by the vertical distance D3 in figure10, as is also indicated in figure 6. The vertical distance D3 in figure10 thus indicate a distance between two conduit arrangements (for example 12-2 and 12-3) that is bigger than zero measured from the lowest point of the upper conduit 12-2 arrangement to the upper point of the lower conduit arrangement 12-3, i.e. the width of the air channel indicated by the dotted arrow marked "ac".

By providing the air channels allowing the air flow to pass through the battery device relatively unhindered the pressure needed to pump or blow the flow of air through the battery device 10 is reduced to an optimum minimum thereby reducing the power consumption of the ventilation system 1 and increasing the efficiency of both the battery device 10 and the ventilation system 1, making the battery device 10 highly beneficial for use as a battery device 10 in a ventilation system 1.

The inventors have also realized and researched that due to the high efficiency of the proposed structure the actual material used in the conduits are of less, or negligible importance, as the material's influence on the overall heat exchange is negligible. The inventors are therefore proposing that the ingenious design discussed herein may also be produced through 3D printing in any material, including various plastics.

In the prior art, producing heat exchangers have required a substantive work effort both as regards the amount of work and the complexity of the work. Some heat exchangers have been produced through 3D printing mechanisms working with metals, but those have been extremely complicated and expensive. However, as the inventors have realized, a heat exchanger or a battery device for a heat exchanger as according to the teachings herein, which are so efficient that they may be produced using any material, makes it possible to work with plastic materials which makes the 3D printing significantly less complicated and substantially cheaper!

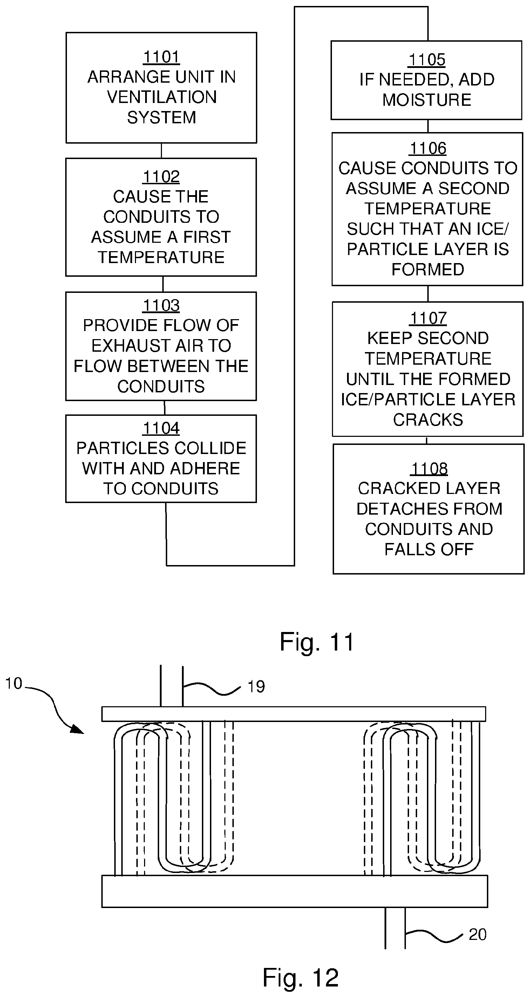

The contemporary understanding is that a heat exchanger especially for HVAC systems has to be made of metal, and to step away from this prevalent prejudice is not obvious and indicates an inventive step in itself! Furthermore, the work effort required to construct a metal heat exchanger has been a problem that has been around for many years. Figure 11 thus show an arrangement in which a 3D printer 100 produces a conduit arrangement 12 for use in a battery device 10 according to herein. The 3D printer may also be arranged to produce a layering of conduit arrangements 12-1, 12-2, 12-3, 12-4 as shown in the figures herein, where it also becomes apparent that the type or shape of transport channel 13a, 13b, 13c, 14a, 14b is of less importance as the work required for the mounting is not of importance, as the mounting is automated in the 3D printing process. As shown in figure 11, the 3D printer may be used to generate the battery device 10, with some or all parts including, but not limited to, the housing 11, the distribution channel 19, the collection channel 20, the conduit arrangements 12 and/or layering thereof, the conduits 13, 14, and the transport channels 13b, 14b. Not shown in figure 11 is that the 3D printer 100 may also be utilized to provide the distancing means (or supports) 17 for the conduit arrangements such as discussed in relation to figures 7 and 8, possibly replacing such distancing supports as the mounting may be provided by the 3D printer, as would be apparent to a skilled person taking part of the teachings herein.

Figure 12 shows a flowchart of the simple method of providing a battery device through a 3D printing methodology as discussed herein, wherein the method comprises 3D printing 810 at least one conduit arrangement 12 or parts thereof possibly including the distribution and/or collection conduits as disclosed herein. It should be noted that all aspects and features discussed herein for the bent conduit arrangements discussed in relation to figures 1 to 9 also apply to the general conduit arrangements discussed in relation to figures 10 to 13, and that all aspects and features discussed herein for the general conduit arrangements discussed in relation to figures 10 to 13 also apply to the bent conduit arrangements discussed in relation to figures 1 to 9. The inventors have also realized that the ingenious arrangement discussed herein may not only be used in relation to a ventilation system for use in marine environments, dryer systems as well as kitchens or other system used with air carrying particles. As the manufacture of a heat exchanger is complicated regardless of the application of the resulting heat exchanger, all fields of use for heat exchangers will benefit form a heat exchanger as discussed herein, simply in the fact that it allows for manufacture using a great variety of materials, including plastics, and thus enables for being manufactured through 3D printing.

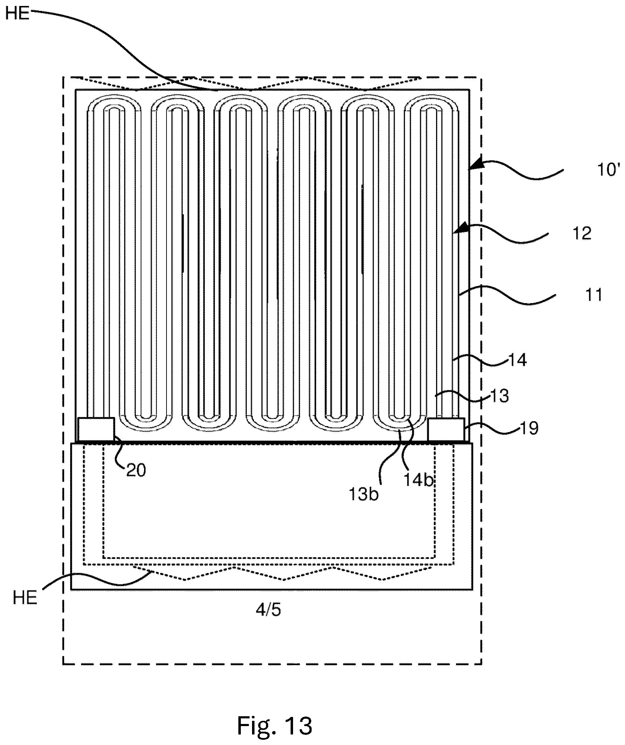

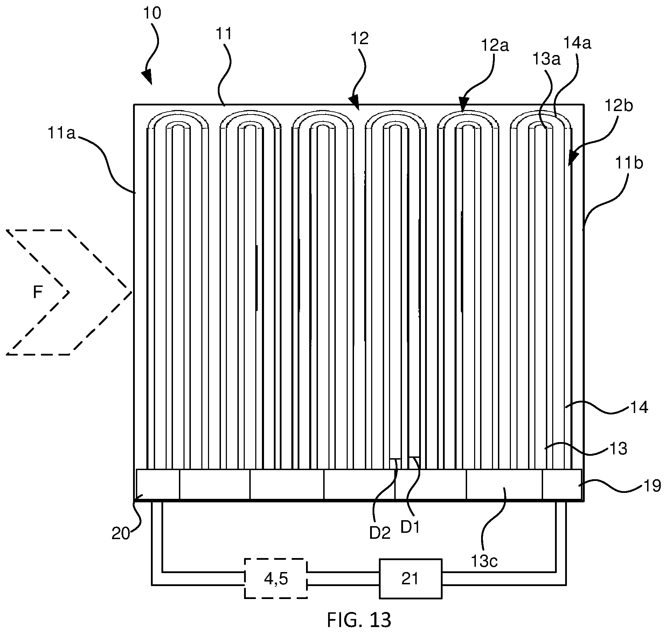

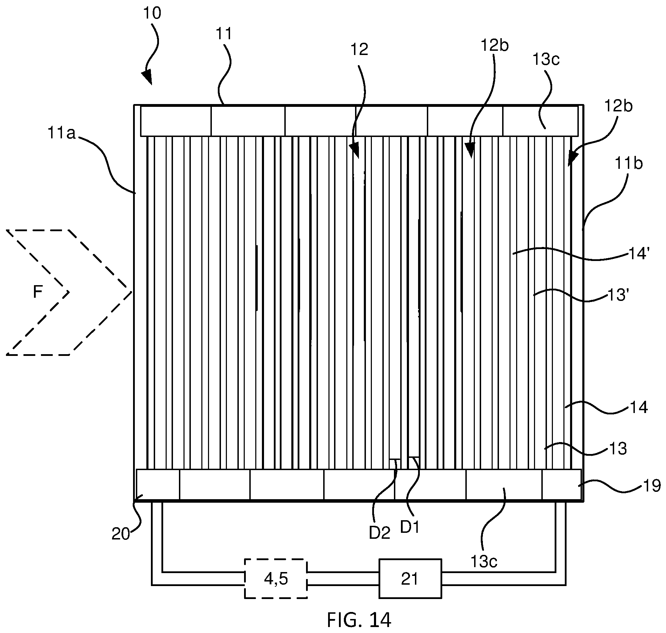

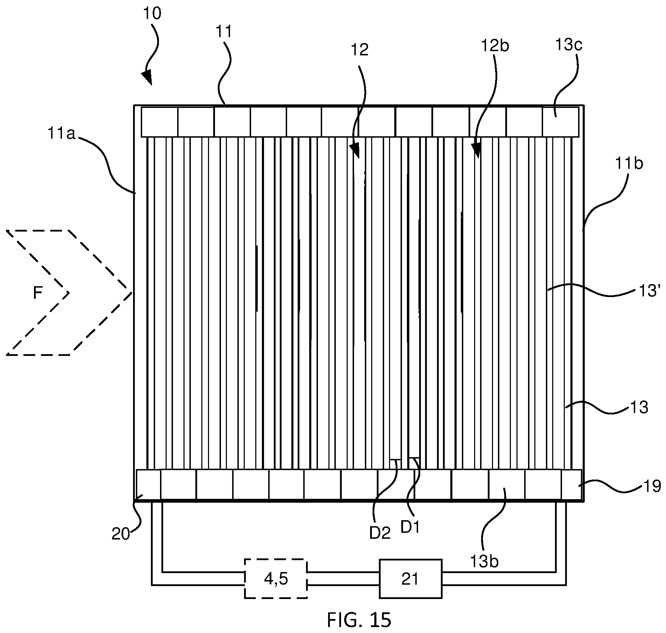

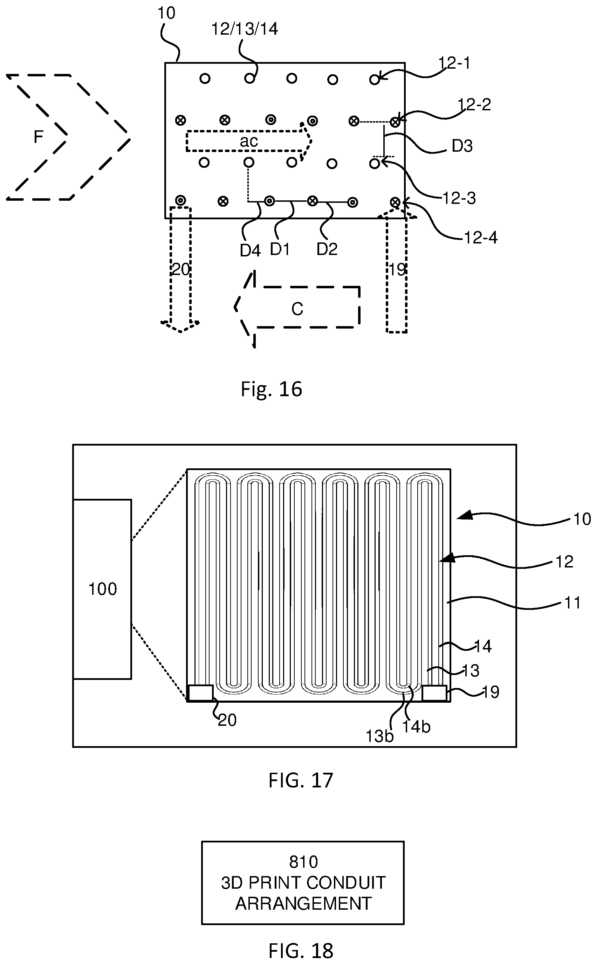

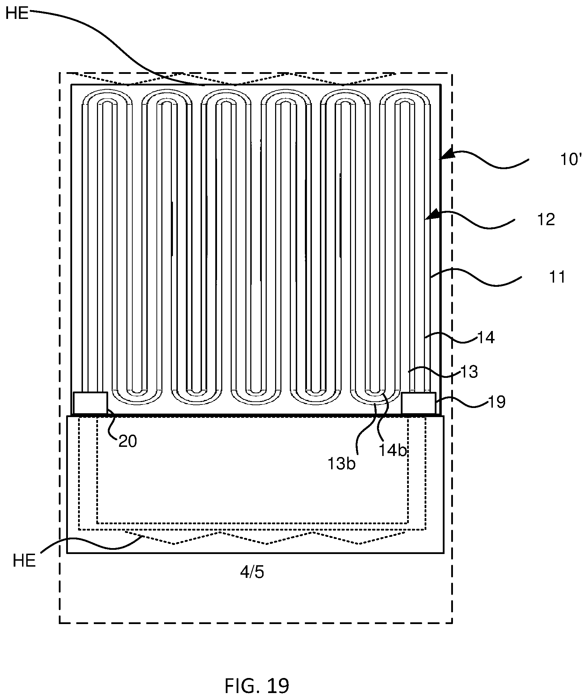

Figure 13 shows a schematic view of a heat exchanger 10' constructed along the same principals as the battery device 10 disclosed herein. All benefits and variations discussed with reference to the battery device 10 may also be applied to the heat exchanger 10'. Figure 13 also shows how the heat exchanger can be comprised in a heat exchange system 4,5 or adapted to operate as a battery device for a heat exchange system 4,5. As a skilled person would understand a heat exchanging structure may be used both as a heat exchanger and or alternatively as a battery device and no more details on this will be given herein. The method disclosed with reference to figure 12 showing a flowchart of the simple method of providing a battery device through a 3D printing methodology as discussed herein, can thus also be used to provide a heat exchanger 10' as disclosed herein wherein the method comprises 3D printing 810 at least one conduit arrangement 12 or parts thereof possibly including the distribution and/or collection conduits as disclosed herein to be used in the heat exchanger 10' .

## Claims

1. A battery device (10) arranged to be installed in a ventilation system (1) and arranged to extract energy from a flow (F) of air, said battery device (10) comprises:
a housing (11) arranged to receive said flow (F) of air through a first end (11a) and
a plurality of conduit arrangements (12) arranged inside said housing (11) to extend in a direction from the first end of the housing (11a) to a second end of the housing (11b), whereby said flow (F) of air will pass along the conduit arrangements (12) when said flow (F) of air is received by said housing (11) at the first end,
wherein each of said plurality of conduit arrangements (12) comprises a first conduit (13) and a second conduit (14) arranged in a pattern extending horizontally in the direction of the conduit arrangement (12),
wherein the first conduit (13) is arranged interleaved with the second conduit (14), wherein the pattern comprises transport channels (12a, 13a, 13b, 13c, 14a, 14b) and straight sections (12b), the straight sections (12b) being arranged horizontally and in a first direction relative the flow of air, wherein each of the first conduit (13) and the second conduit (14) comprises a plurality of straight sections (12b) and a plurality of bent sections (12a),
wherein a first bent conduit arrangement (12-1) is arranged parallel to a second bent conduit arrangement (12-2) at a vertical distance (D3), which distance is bigger than zero measured from a lowest point of the first bent conduit arrangement (12-1) to the highest point of the second bent conduit arrangement (12-2), thereby providing a channel (ac) for the air (F) to flow through,
wherein said at least first conduit (13) and second conduit (14) are arranged to receive a coolant (C), wherein the coolant is received at the second end of the housing and, wherein
the first conduit (13) is arranged bent utilizing a first (13a) and a second (13b) bent section, the second conduit (14) is arranged bent utilizing a first (14a) and a second (14b) bent section, wherein the first bent section (13a) of the first conduit (13) matches the corresponding first bent section (14a) of the second conduit (14) and the second bent section (13b) of the first conduit (13) matches the corresponding second bent section (14b) of the second conduit (14), and,
wherein the first bent section (13a) and second bent section (13b) of the first conduit (13) and the first bent section (14a) and second bent section (14b) of the second conduit (14) are horizontal, and
wherein the straight sections (12b) of a conduit arrangement (12-1, 12-2) being arranged at a same horizontal distance (D1, D2) to one another, wherein the horizontal distance (D1, D2) is the same as the vertical distance (D3), wherein the first conduit (13) is parallel to the second conduit (14) in the straight sections (12b) and wherein the distance (D1) between the first conduit (13) and the second conduit (14) in a straight section (12b) equals the distance (D2) between two straight sections (12b), wherein the battery device (10) further comprises at least one support (17) having an upper side (17a) and a lower side (17b), the at least one support (17) being arranged between the first bent conduit arrangement (12-1) and the second bent conduit arrangement (12-2), wherein said support (17) is arranged to extend in a direction parallel to the flow (F) of air and comprises cutouts (17C) for receiving said first and second conduits (13, 14).

2. The battery device (10) according to claim 1, wherein the radius of the first bent section (13a) of the first conduit (13) is equal to 1.5 - 2.5 times a diameter of the first conduit (13) and
wherein the radius of the second bent section (14b) of the second conduit (14) is equal to 1.5 - 2.5 times a diameter of the first conduit (13).

3. The battery device according to any of claims 1-2, further comprising a distribution conduit (19) arranged at the second end (11b) of the housing (11) to distribute a fluid to each conduit (13, 14, 15, 16) of the bent conduit arrangement (12) and a collection conduit (20) arranged at the first end (11a) of the housing (11) to collect the fluid after it has been transported through said conduits (13, 14, 15, 16).

4. The battery device according to any preceding claim, arranged to be used in a marine environment or in a kitchen system.

## Patentansprüche

1. Batterievorrichtung (10), die angeordnet ist, um in einem Belüftungssystem (1) installiert zu werden und angeordnet ist, um Energie aus einem Luftstrom (F) zu extrahieren, die Batterievorrichtung (10) aufweisend:
ein Gehäuse (11), das angeordnet ist, um den Luftstrom (F) durch ein erstes Ende (11a) aufzunehmen, und
eine Mehrzahl von Leitungsanordnungen (12), die innerhalb des Gehäuses (11) angeordnet sind, um sich in einer Richtung von dem ersten Ende des Gehäuses (11a) zu einem zweiten Ende des Gehäuses (11b) zu erstrecken, wobei die Luftströmung (F) entlang der Leitungsanordnungen (12) verläuft, wenn die Luftströmung (F) von dem Gehäuse (11) an dem ersten Ende aufgenommen wird,
wobei jede der Mehrzahl von Leitungsanordnungen (12) eine erste Leitung (13) und eine zweite Leitung (14) aufweist, die in einem Muster angeordnet sind, das sich horizontal in Richtung der Leitungsanordnung (12) erstreckt,
wobei die erste Leitung (13) mit der zweiten Leitung (14) verschachtelt angeordnet ist, wobei das Muster Transportkanäle (12a, 13a, 13b, 13c, 14a, 14b) und gerade Abschnitte (12b) umfasst, wobei die geraden Abschnitte (12b) horizontal und in einer ersten Richtung in Bezug auf den Luftstrom angeordnet sind, wobei jede der ersten Leitung (13) und der zweiten Leitung (14) eine Mehrzahl von geraden Abschnitten (12b) und eine Mehrzahl von gebogenen Abschnitten (12a) aufweist,
wobei eine erste gebogene Leitungsanordnung (12-1) parallel zu einer zweiten gebogenen Leitungsanordnung (12-2) in einem vertikalen Abstand (D3) angeordnet ist, wobei der Abstand, gemessen von einem tiefsten Punkt der ersten gebogenen Leitungsanordnung (12-1) zu dem höchsten Punkt der zweiten gebogenen Leitungsanordnung (12-2), größer als Null ist wodurch ein Kanal (ac) für die Luft (F) für ein Durchströmen vorgesehen wird,
wobei die mindestens erste Leitung (13) und die zweite Leitung (14) angeordnet sind, um ein Kühlmittel (C) aufzunehmen, wobei das Kühlmittel an dem zweiten Ende des Gehäuses aufgenommen wird, und wobei
die erste Leitung (13) unter Verwendung eines ersten (13a) und eines zweiten (13b) gebogenen Abschnitts gebogen angeordnet ist, die zweite Leitung (14) unter Verwendung eines ersten (14a) und eines zweiten (14b) gebogenen Abschnitts gebogen angeordnet ist, wobei der erste gebogene Abschnitt (13a) der ersten Leitung (13) mit dem entsprechenden ersten gebogenen Abschnitt (14a) der zweiten Leitung (14) und der zweiten gebogenen
Abschnitt (13b) der ersten Leitung (13) mit dem entsprechenden zweiten gebogenen Abschnitt (14b) der zweiten Leitung (14) übereinstimmt, und
wobei der erste gebogene Abschnitt (13a) und der zweite gebogene Abschnitt (13b) der ersten Leitung (13) und der erste gebogene Abschnitt (14a) und der zweite gebogene Abschnitt (14b) der zweiten Leitung (14) horizontal sind, und
wobei die geraden Abschnitte (12b) einer Leitungsanordnung (12-1, 12-2) in einem gleichen horizontalen Abstand (D1, D2) zueinander angeordnet sind, wobei der horizontale Abstand (D1, D2) gleich dem vertikalen Abstand (D3) ist, wobei die erste Leitung (13) parallel zu der zweiten Leitung (14) in den geraden Abschnitten (12b) ist und wobei der Abstand (D1) zwischen der ersten Leitung (13) und der zweiten Leitung (14) in einem geraden Abschnitt (12b) gleich dem Abstand (D2) zwischen zwei geraden Abschnitten (12b) ist, wobei die Batterievorrichtung (10) ferner mindestens einen Träger (17) mit einer Oberseite (17a) und einer Unterseite (17b) aufweist, wobei der mindestens eine Träger (17) zwischen der ersten gebogenen Leitungsanordnung (12-1) und der zweiten gebogenen Leitungsanordnung (12-2) angeordnet ist, wobei der Träger (17) angeordnet ist, um sich in einer Richtung parallel zu dem Luftstrom (F) zu erstrecken, und Ausschnitte (17C) für ein Aufnehmen der ersten und zweiten Leitung (13, 14) aufweist.

2. Batterievorrichtung (10) nach Anspruch 1, wobei der Radius des ersten gebogenen Abschnitts (13a) der ersten Leitung (13) gleich dem 1,5- bis 2,5-Fachen eines Durchmessers der ersten Leitung (13) ist und
wobei der Radius des zweiten gebogenen Abschnitts (14b) der zweiten Leitung (14) gleich dem 1,5- bis 2,5-Fachen eines Durchmessers der ersten Leitung (13) ist.

3. Batterievorrichtung nach einem der Ansprüche 1 bis 2, ferner aufweisend eine Verteilungsleitung (19), die an dem zweiten Ende (11b) des Gehäuses (11) angeordnet ist, um ein Fluid an jede Leitung (13, 14, 15, 16) der gebogenen Leitungsanordnung (12) zu verteilen, und eine Sammelleitung (20), die an dem ersten Ende (11a) des Gehäuses (11) angeordnet ist, um das Fluid zu sammeln, nachdem es durch die Leitungen (13, 14, 15, 16) transportiert wurde.

4. Batterievorrichtung nach einem der vorhergehenden Ansprüche, die angeordnet ist, um in einer maritimen Umgebung oder in einem Küchensystem verwendet zu werden.

## Revendications

1. Dispositif de batterie (10) agencé pour être installé dans un système de ventilation (1) et agencé pour extraire de l'énergie d'un flux (F) d'air, ledit dispositif de batterie (10) comprend :
un boîtier (11) agencé pour recevoir ledit flux (F) d'air à travers une première extrémité (11a) et
une pluralité d'agencements de conduits (12) agencés à l'intérieur dudit logement (11) pour s'étendre dans une direction depuis la première extrémité du logement (11a) jusqu'à une seconde extrémité du logement (11b), grâce à quoi ledit flux (F) d'air passe le long des agencements de conduits (12) lorsque ledit flux (F) d'air est reçu par ledit logement (11) au niveau de la première extrémité,
dans lequel chacun de ladite pluralité d'agencements de conduits (12) comprend un premier conduit (13) et un second conduit (14) agencés selon un motif s'étendant horizontalement dans la direction de l'agencement de conduits (12),
dans lequel le premier conduit (13) est agencé entrelacé avec le second conduit (14), dans lequel le motif comprend des canaux de transport (12a, 13a, 13b, 13c, 14a, 14b) et des sections droites (12b), les sections droites (12b) étant agencées horizontalement et dans une première direction par rapport à l'écoulement d'air, dans lequel chacun du premier conduit (13) et du second conduit (14) comprend une pluralité de sections droites (12b) et une pluralité de sections coudées (12a),
dans lequel un premier agencement de conduit courbé (12-1) est agencé parallèlement à un second agencement de conduit courbé (12-2) à une distance verticale (D3), laquelle distance est supérieure à zéro mesurée depuis un point le plus bas du premier agencement de conduit courbé (12-1) jusqu'au point le plus haut du second agencement de conduit courbé (12-2), fournissant ainsi un canal (ac) pour que l'air (F) s'écoule à travers,
dans lequel ledit au moins premier conduit (13) et ledit deuxième conduit (14) sont agencés pour recevoir un réfrigérant (C), dans lequel le réfrigérant est reçu au niveau de la deuxième extrémité du boîtier, et
le premier conduit (13) est courbé en utilisant une première (13a) et une seconde (13b) section courbées, le second conduit (14) est courbé en utilisant une première (14a) et une seconde (14b) section courbées, la première section courbée (13a) du premier conduit (13) correspondant à la première section courbée correspondante (14a) du second conduit (14) et à la seconde section courbée
la section (13b) du premier conduit (13) correspond à la seconde section courbée correspondante (14b) du second conduit (14), et,
dans lequel la première section courbée (13a) et la seconde section courbée (13b) du premier conduit (13) et la première section courbée (14a) et la seconde section courbée (14b) du second conduit (14) sont horizontales, et
dans lequel les sections droites (12b) d'un agencement de conduit (12-1, 12-2) étant disposés à une même distance horizontale (D1, D2) les uns aux autres, dans lequel la distance horizontale (D1, D2) est la même que la distance verticale (D3), dans lequel le premier conduit (13) est parallèle au second conduit (14) dans les sections droites (12b) et dans lequel la distance (D1) entre le premier conduit (13) et le second conduit (14) dans une section droite (12b) est égale à la distance (D2) entre deux sections droites (12b), dans lequel le dispositif de batterie (10) comprend en outre au moins un support (17) ayant un côté supérieur (17a) et un côté inférieur (17b), l'au moins un support (17) étant agencé entre le premier agencement de conduit coudé (12-1) et le deuxième agencement de conduit coudé (12-2), dans lequel ledit support (17) est agencé pour s'étendre dans une direction parallèle à l'écoulement (F) d'air et comprend des découpes (17C) pour recevoir lesdits premier et second conduits (13, 14).

2. Dispositif de batterie (10) selon la revendication 1, dans lequel le rayon de la première section courbée (13a) du premier conduit (13) est égal à 1,5 à 2,5 fois le diamètre du premier conduit (13) et
dans lequel le rayon de la seconde section courbée (14b) du second conduit (14) est égal à 1,5 - 2,5 fois un diamètre du premier conduit (13).

3. Dispositif de batterie selon l'une quelconque des revendications 1 et 2, comprenant en outre un conduit de distribution (19) agencé au niveau de la seconde extrémité (11b) du logement (11) pour distribuer un fluide à chaque conduit (13, 14, 15, 16) de l'agencement de conduit coudé (12) et un conduit de collecte (20) agencé au niveau de la première extrémité (11a) du logement (11) pour collecter le fluide après qu'il a été transporté à travers lesdits conduits (13, 14, 15, 16).

4. Dispositif de batterie selon l'une quelconque des revendications précédentes, agencé pour être utilisé dans un environnement marin ou dans un système de cuisine.
